# DEMANDE DE BREVET EUROPEEN

(11) **EP 1 571 393 A1**
(43) Date de publication de la demande: **07.09.2005**
(21) Numéro de dépôt: 05003722.5
(22) Date de dépôt: 22.02.2005
(51) Int. Cl.: F23B 1/38, F23H 3/02, F23L 1/02, F23L 7/00, F23L 15/00

(54) **Procédé et dispositif de combustion de biomasse accompagnée et activée par une forte proportion d'eau**

(30) Priorité: 03.03.2004 FR 0402298
(71) Demandeur: de Bussy, Jacques, Bussy les Poix 80290 (FR)
(72) Inventeur: de Bussy, Jacques, Bussy les Poix 80290 (FR)

(57) **Abrégé**

L'invention concerne la combustion de biomasses à haute température dans un foyer à flamme inversée, combustion réalisée vers les 1500°C juxtaposant les deux caractéristiques suivantes :
1) La biomasse doit être accompagnée de 35 à 55 % d'eau, provenant de la biomasse elle-même ou ajoutée artificiellement.
2) L'air de combustion doit être préchauffé à quelque 800°C avant d'être pulsé directement sous le lit de braises reposant sur la grille du foyer du générateur.

Le processus met en oeuvre une grille-échangeur de température permettant de prélever au générateur l'énergie de pré-chauffage du comburant, puis de le pulser sous le lit de braises.

Dans ce processus de combustion à haute température les rôles joués par l'eau sont essentiels :
- le vapo-craquage permet de réaliser une combustion propre.
- la décomposition partielle de l'eau formant, de façon éphémère, du "gaz à l'eau" participe au haut rendement de la combustion.

L'énergie extraite d'un kilogramme de bois vert contenant 50% d'eau est de l'ordre de 1500 à 1600 Kcal.

## Description

La présente invention est relative à un procédé et un dispositif destinés à réaliser la combustion continue à haute température et en faible épaisseur de biomasse fragmentée accompagnée d'une forte proportion d'eau, et plus particulièrement du "bois vert" pouvant en contenir jusqu'à 55 %.

Le bois choisi comme combustible pour le présent exposé, doit être préalablement fragmenté par déchiquetage ou tranchage.

L'invention s'applique particulièrement aux générateurs thermiques de type à "flamme inversée" fonctionnant donc sous dépression. Le lit de combustion, dont seule la base est en ignition repose à cet effet sur la grille du foyer. Ces quelques particularités, tout comme la disposition radiale autour d'un axe de symétrie vertical des échangeurs du générateur sont (prises comme exemple de réalisation) décrites dans le Brevet Français 2743869.

En préambule à l'exposé qui suit rappelons le fait qui consiste, en soufflant de l'air sur des braises, à exacerber leur combustion en provoquant une forte élévation de température. La présente invention se propose notamment d'intensifier le phénomène en portant à une température voisine de 800°C l'air qui sera pulsé sous les braises occupant le foyer. Dès lors leur niveau énergétique atteindra les environs de 1500°C, température à laquelle l'eau est décomposée en présence de carbone.

Notons encore comme techniques antérieures :
- Celle qui consiste à pulser sous le lit de combustion le comburant amené latéralement (donc sans véritable échange thermique organisé) par les barreaux creux de la grille, barreaux percés de nombreux orifices à leurs sommets en vue de pulser le comburant sous le lit de combustion;
- Et celle qui consiste à prolonger le dessous des barreaux par des cloisons déterminant entre elles des passages pour les produits issus de la combustion. Ces cloisons emplies d'eau appartenant à un circuit extérieur (destiné à des applications de chauffage) sont le siège d'un échange thermique avec les produits issus de la combustion dans le générateur. Ces dispositions antérieures sont décrites notamment dans le Brevet allemand Barzik n° 922.904

La présente invention utilise et transforme ces dispositions en vue de réaliser le préchauffage à quelques 800°C de l'air de combustion pulsé directement sous les braises reposant à la base du foyer, sur la grille.

Procédé pour réaliser la combustion continue à haute température de biomasse et plus particulièrement de bois fragmenté sur la grille d'un foyer fonctionnant à flamme inversée, caractérisé en ce que les deux dispositions suivantes sont associées :
A) la biomasse alimentant le foyer doit être accompagnée, naturellement ou artificiellement, d'une forte proportion d'eau, comprise entre 35 et 55 %;
B) la température de l'air de combustion pulsé sous le lit de braises reposant sur la grille doit être portée préalablement à environ 800°C; ces deux dispositions étant associées pour permettre l'établissement d'une zone de combustion de faible épaisseur à température égale ou supérieure à 1500°C, dénommée ci-après "barrage thermique" compris et limité d'une part par la grille du foyer et de l'autre par la forte action endothermique due à l'évaporation de l'eau accompagnant la biomasse à l'approche du dit barrage.

En cas d'abaissement de la teneur en eau accompagnant la biomasse, l'épaisseur de la zone de combustion augmente. Cette extension perturbatrice engendre une précombustion au-dessus du "barrage thermique" et provoque la formation de cendres qui ne sont plus "balayées". Elles troublent le fonctionnement normal du dispositif. Cette extension est détectable à l'aide de capteurs thermiques convenablement situés au-dessus du dit barrage. Ils permettent l'ajustement de la quantité d'eau qui devra accompagner la biomasse pour rétablir l'effet endothermique requis.

La mise en fonctionnement du foyer est exécutée en établissant le "barrage thermique" initial par la mise en combustion d'un lot de charbon de bois sur la grille.

Dans le processus continu de combustion, objet de l'invention, la combustion qui est oxydante est achevée à l'intérieur de la "barrière thermique" elle-même.

A titre indicatif, l'inertie de fonctionnement du foyer cessant d'être alimenté en bois vert est de l'ordre de 15 minutes. Ajoutons que, du fait de la forte teneur en eau de la biomasse, le risque de voir se propager un incendie à l'intérieur de la réserve est inexistant.

Dispositif, pour la mise en oeuvre du procédé, établissant une grille-échangeur de température constituée d'un assemblage de hautes cloisons parallèles (1) et verticales régulièrement espacées les unes des autres afin de former autant de cellules indépendantes (2), ouvertes à leurs extrémités hautes et basses, cloisons dont les sommets (3) établis selon un même plan horizontal constituent le support du lit de braises du foyer en action, les dites cellules étant parcourues de haut en bas par les gaz brûlés, caractérisé en ce que les dites cloisons sont percées, dans leur épaisseur, de forages verticaux (5) empruntés à contre-courant par l'air de combustion pressurisé qui est ainsi porté aux environs de 800°C par échange thermique avant d'être pulsé directement sous le lit de braises.

Accompagnant le combustible, l'eau qu'elle provienne de la biomasse elle-même ou à défaut qu'elle soit ajoutée à celle-ci, par pulvérisation ou autres moyens, à l'approche immédiat du "barrage thermique" joue des rôles déterminants :
- Transformée dans le foyer en vapeur sèche, le grand volume de gaz qu'elle engendre contribue à balayer instantanément les cendres dès leur formation, ce qui a pour effet de maintenir en contact le lit de braises avec la grille. Ceci permet la continuité de la combustion.
- Elle est, au moins en partie, décomposée dans le "barrage thermique" pour former, de façon éphémère du "gaz à l'eau". Ce fait contribue au rendement élevé de la dite combustion puisque l'on extrait 1500 à 1600 Kcal par Kg. de bois vert contenant 50 % d'eau.
- Elle contribue de façon active au craquage des vapeurs pyroligneuses lourdes émises par le bois ce qui aboutit à une combustion propre.

Le vapo-craquage résultant de l'action combinée de la haute température et de la présence de vapeur d'eau devrait pouvoir trouver (tout en maintenant les caractéristiques de fonctionnement du processus) des applications dans l'incinération sans émissions polluantes de certaines substances organiques à dégrader, qu'elles se présentent sous la forme solide ou en solutions aqueuses.

La température des cloisons formant la grille-échangeur résulte d'un équilibre qui s'établit entre celles des flux gazeux circulant à contre-courant. Aux alentours de 800 à 900°C, elle demeure inférieure à celle admise pour l'emploi du métal réfractaire qui les constitue.

Les gaz brûlés issus des dites cellules s'engagent ensuite dans l'enceinte du générateur afin d'y céder le potentiel énergétique qu'ils contiennent.

La vapeur d'eau se retrouvant dans les gaz brûlés pourra, éventuellement, restituer par condensation une partie de l'énergie prélevée initialement au processus de combustion pour sa propre évaporation.

De menues braises sont entraînées au travers des dites cellules. Elles achèveront leur combustion sur une sole-doseuse située à leur aplomb (voir par exemple le Brevet Français 2745869 page 3 lignes 9 à 13)

L'essentiel de l'air de combustion est amené préchauffé sous le lit de braises et la dépression établie à l'intérieur du générateur a pour objet l'extraction des gaz brûlés formés dans le foyer, lequel reste cependant sous légère dépression ayant pour but de s'opposer à la remontée de fumée à l'intérieur de la biomasse amenée au-dessus du foyer.

De la hauteur des cloisons formant la grille dépend l'importance de l'échange thermique entre les produits issus de la combustion et le comburant circulant à contre-courant à l'intérieur même des dites cloisons.

Le procédé de combustion, objet de la présente invention requiert une température de fonctionnement élevée. Son abaissement au-dessous d'un certain seuil (du fait de la progression de l'effet endothermique dû à l'évaporation de l'eau accompagnant le bois) engendre une réduction de l'épaisseur du "barrage thermique" pouvant aboutir à son extinction; elle est alors rapide.

De cette constatation il résulte que les variations de puissance admises par action sur la température du foyer sont limitées, et que la puissance émise par unité de surface de la grille établie selon l'invention est à peu près stable.

Le moyen d'agir sur la puissance émise consiste à faire varier la surface active de la grille occupant le foyer.

Dispositif permettant son exploitation à puissance variable, comportant une grille-échangeur de température de forme rectangulaire établie à partir de cloisons transversales (1) dont les sommets (3), formant le support du lit de braises, caractérisé en ce que la surface du dit lit de braises est ajustable grâce aux déplacements longitudinaux d'un écran glissant au-dessus des dites cloisons qu'il masque ou dévoile, avec action simultanée en fermeture ou ouverture du circuit d'air qui les alimente.

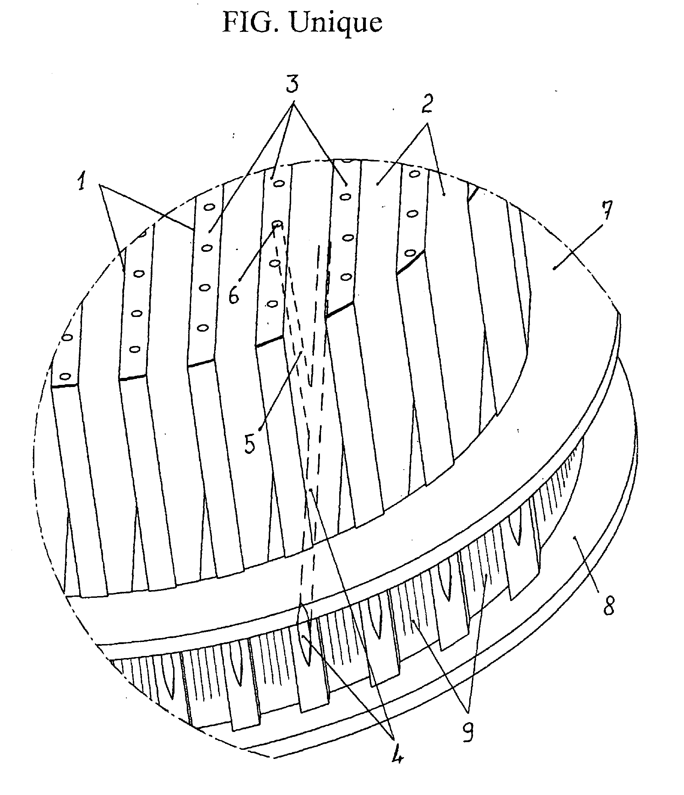

Le dessin figure unique illustre un exemple de dispositif conforme à l'invention. Il représente une portion de grille-échangeur selon l'invention.
1 - Cloisons verticales constituant la grille-échangeur
2 - Espaces intercalaires entre les cloisons, constituant les cellules parcourues de haut en bas par les produits issus de la combustion.
3 - Sommets des cloisons constituant un plan horizontal sur lequel repose le lit de combustion.
4 - Canaux d'alimentation en air de combustion. Ils sont aménagés à l'intérieur et à la base des cloisons.
5 - Forages verticaux dans lesquels se réalise l'échange thermique portant à haute température l'air de combustion.
6 - Orifices débouchant sous le lit de combustion.
7 et 8 - Flasques contre lesquelles sont assemblées les cloisons.
9 - Clôture intercalaires entre cloisons et flasques.
N.-B. Les flasques 7 et 8, les clôtures 9 et une virole extérieure à ces flasques, non représentée, constituent une chambre annulaire permettant d'alimenter en air de combustion pulsé les canaux 4 puis les forages 5, air qui une fois porté à haute température par échange thermique débouche pour être pulsé sous le lit de braises, par les orifices 6.

## Revendications

1. Procédé pour réaliser la combustion à haute température de biomasse et plus particulièrement de bois fragmenté sur la grille d'un foyer fonctionnant à flamme inversée, **caractérisé en ce que** les deux dispositions suivantes sont associées :
A) La biomasse alimentant le foyer doit être accompagnée, naturellement ou artificiellement, d'une forte proportion d'eau comprise entre 35 et 55 % ;
B) La température de l'air de combustion pulsé sous le lit de braises reposant sur la grille doit être portée préalablement à environ 800°C : ces deux dispositions étant associées pour permettre l'établissement d'une zone de combustion de faible épaisseur à température égale ou supérieure à 1500°C, dénommé ci-après "barrage thermique" compris et limité d'une part par la grille du foyer d'une part et de l'autre par la forte action endothermique due à l'évaporation de l'eau accompagnant la biomasse à l'approche du dit barrage.

2. Dispositif, pour la mise en oeuvre du procédé selon la première revendication, établissant une grille échangeur de température constituée d'un assemblage de hautes cloisons parallèles (1) et verticales régulièrement espacées les unes des autres afin de former autant de cellules indépendantes (2), ouvertes à leurs extrémités hautes et basses, cloisons dont les sommets (3) établis selon un même plan horizontal constituent le support du lit de braises du foyer en action, les dites cellules étant parcourues de haut en bas par les gaz brûlés, **caractérisé en ce que** les dites cloisons sont percées, dans leur épaisseur, de forages verticaux (5) empruntés à contre courant par l'air de combustion pressurisé qui est ainsi porté aux environs de 800°C par échange thermique avant d'être pulsé directement sous le lit de braises.

3. Dispositif selon la revendication 2, permettant son exploitation à puissance variable, comportant une grille-échangeur de température de forme rectangulaire établie à partir de cloisons transversales (1) dont les sommets (3), formant le support du lit de braises, **caractérisé en ce que** la surface du dit lit de braises est ajustable grâce aux déplacements longitudinaux d'un écran glissant au-dessus des dites cloisons qu'il masque ou dévoile, avec action simultanée en fermeture ou ouverture du circuit d'air qui les alimente.
